# EUROPÄISCHE PATENTSCHRIFT

(11) **EP 2 843 265 B1**
(45) Veröffentlichungstag und Bekanntmachung des Hinweises auf die Patenterteilung: **08.05.2019**
(21) Anmeldenummer: 14179562.5
(22) Anmeldetag: 01.08.2014
(51) Int. Cl.: F16H 59/70, F16H 61/30, F16H 63/30

(54) **Schaltstellungserfassungsvorrichtung zur Erfassung der Schaltstellungen eines mechanischen Zwei-Gang-Schaltgetriebes**
Switch position detection device for detecting the switching positions of a mechanical two-speed transmission
Dispositif de détection de position de commutation destiné à détecter les positions de commutation d'une boîte de vitesses mécanique à deux rapports

(30) Priorität: 08.08.2013 DE 102013108596
(43) Veröffentlichungstag der Anmeldung: 04.03.2015
(73) Patentinhaber: Linde Hydraulics GmbH & Co. KG, 63743 Aschaffenburg (DE)
(72) Erfinder: Langen, Dr. Alfred, 63762 Großostheim (DE)
(74) Vertreter: Patentship Patentanwaltsgesellschaft mbH

(56) Entgegenhaltungen:
- DE-A1-102011 055 173
- JP-A- 2010 160 104
- US-A1- 2011 303 033

## Beschreibung

Die Erfindung betrifft eine Schaltstellungserfassungsvorrichtung zur Erfassung der Schaltstellungen eines mechanischen Zwei-Gang-Schaltgetriebes, insbesondere eines Stillstandsschaltgetriebes, wobei das Schaltgetriebe Schaltstellungen für eine erste Schaltstufe des Schaltgetriebes, für eine zweite Schaltstufe des Schaltgetriebes und für eine eine Leerlaufstellung bildende Neutralstellung des Schaltgetriebes aufweist, wobei die Schaltstellungserfassungsvorrichtung zwei Sensoren aufweist, die mit mehreren relativ zu den Sensoren längsbewegbaren Schaltrampen zusammenwirken, wobei in der Neutralstellung des Schaltgetriebes beide Sensoren betätigt sind.

Gattungsgemäße Schalterfassungsvorrichtungen sind aus der US 2011/303033 A1 und der JP 2010-160104 A bekannt.

Mechanische Zwei-Gang-Schaltgetriebe werden in mobilen Arbeitsmaschinen eingesetzt, insbesondere Landmaschinen, Forstmaschinen und Baumaschinen, beispielsweise Rad- und Teleskoplader, Bagger, Forstmaschinen, Schlepper, Mähdrescher, Feldhäcksler, Zuckerrüben- oder Kartoffelroder.

Aus Kostengründen oder wegen des einfachen und kompakten Aufbaus werden in mobilen Arbeitsmaschinen in der Regel als unsynchronisierte Stillstandschaltgetriebe ausgebildete Zwei-Gang-Schaltgetriebe eingesetzt. Bekannte als Stillstandschaltgetriebe ausgebildete Zwei-Gang-Schaltgetriebe werden mittels eines Schaltaktuators betätigt, beispielsweise eines hydraulischen Schaltaktuators. Für bestimmte Anwendungsfälle ist es erforderlich, dass mit dem Schaltaktuator eine Schaltstellung für die erste Schaltstufe (erster Gang), eine Schaltstellung für die zweite Schaltstufe (zweiter Gang) und eine Schaltstellung für die Neutralstellung des Schaltgetriebes aktiv angesteuert werden kann. Die Neutralstellung bildet die Leerlaufstellung des Schaltgetriebes. Die aktive Ansteuerung der Neutralstellung des Schaltgetriebes kann zum Abschleppen der Arbeitsmaschine erforderlich sein.

Sofern das Zwei-Gang-Schaltgetriebe von einem Hydromotor eines hydrostatischen Getriebes angetrieben ist, ist es bereits bekannt, das Zwei-Gang-Schaltgetriebe als einfach und kostengünstig aufgebautes unsynchronisiertes Stillstandsschaltgetriebe auszubilden, das während der Fahrt zwischen den Schaltstufen und somit den Gängen schaltbar ist. Zum Wechsel der Schaltstufen während der Fahrt wird hierzu das Zwei-Gang-Schaltgetriebe drehmomentfrei gemacht und anschließend in die Neutralstellung und somit die Leerlaufstellung betätigt wird. In der Neutralstellung des Schaltgetriebes kann über den Hydromotor eine elektrohydraulische Drehzahlsynchronisierung durchgeführt werden, um anschließend während der Fahrt die neue Schaltstufe am Schaltgetriebe einlegen zu können.

Ein derartiges, von einem Hydromotor angetriebenes Zwei-Gang-Schaltgetriebe, das als Stillstandschaltgetriebe ausgebildet ist und während der Fahrt der Gangwechsel zwischen den Schaltstufen durchgeführt werden kann, ist aus der DE 10 2011 055 173 A1. An dem Zwei-Gang-Schaltgetriebe ist für den Wechsel der Schaltstufen ein hydraulischer Schaltaktuator mit drei Schaltstellungen erforderlich, mit dem das Zwei-Gang-Schaltgetriebe in die erste Schaltstufe und die zweite Schaltstufe sowie aktiv in die Neutralstellung betätigt werden kann, um in der Neutralstellung des Schaltgetriebes während der Fahrt der Arbeitsmaschine die elektrohydraulische Drehzahlsynchronisierung durchführen zu können. Bei derartigen Stillstandschaltgetrieben, die während der Fahrt zwischen den Schaltstufen geschaltet werden und bei denen in der Neutralstellung durch den das Schaltgetriebe antreibenden Hydromotor eine elektrohydraulische Drehzahlsynchronisation durchgeführt, ist für den Schaltvorgang eine Erfassung der Schaltstellungen des Schaltaktuators und somit des Schaltgetriebes erforderlich.

Der vorliegenden Erfindung liegt die Aufgabe zugrunde, eine Schalterfassungsvorrichtung zur Erfassung der Schaltstellungen eines mechanischen Zwei-Gang-Schaltgetriebes, insbesondere eines Stillstandsschaltgetriebes, der eingangs genannten Gattung zur Verfügung zu stellen, die eine eindeutige und sichere Erfassung der Schaltstellungen des Schaltgetriebes ermöglicht.

Diese Aufgabe wird erfindungsgemäß dadurch gelöst, dass bei einer Hubbewegung eines zum Schalten der Schaltstellungen vorgesehenen Schaltelements des Schaltgetriebes im Normalbetrieb niemals die beiden Sensoren gleichzeitig ihren Schaltzustand ändern, sondern jeweils nur einer der beiden Sensoren seinen Schaltzustand ändert. Eine derartige Schaltstellungserfassungsvorrichtung, die eine Wegerfassung an einem Schaltelement des Schaltgetriebes bildet und bei der bei einem bestimmten Hub des Schaltelements des Schaltgetriebes jeweils nur ein Sensor seinen Schaltzustand ändert, ermöglicht es, den Schaltzustand und die Schaltstellungen des Schaltgetriebes eindeutig zu überwachen sowie die Stellungen des Schaltgetriebes eindeutig zu erkennen.

Gemäß einer vorteilhaften Ausführungsform der Erfindung weist die Schaltstellungserfassungsvorrichtung eine erste Schaltrampe und eine zweite Schaltrampe auf, die in axialer Richtung voneinander beabstandet sind, wobei zwischen der ersten Schaltrampe und der zweiten Schaltrampe eine dritte Schaltrampe angeordnet ist, die sowohl von der ersten Schaltrampe als auch von der zweiten Schaltrampe in axialer Richtung beabstandet ist, wobei die beiden Sensoren in axialer Richtung voneinander beabstandet angeordnet sind. Mit einer aus zwei Sensoren, die mit drei Schaltrampen zusammenwirken, gebildeten Schaltstellungserfassungsvorrichtung kann eine eindeutige Überwachung des Schaltzustandes und somit der Schaltstellung des Schaltgetriebes bei einfachem und kostengünstigen Aufbau der Schaltstellungserfassungsvorrichtung erzielt werden.

Der erste Sensor wirkt gemäß einer Ausführungsform der Erfindung über den Hubbereich des Schaltelements des Schaltgetriebes mit der ersten Schaltrampe und der dritten Schaltrampe zusammen und der zweite Sensor wirkt über den Hubbereich des Schaltelements des Schaltgetriebes mit der zweiten Schaltrampe und der dritten Schaltrampe zusammen.

Die Sensoren sind bevorzugt an der entsprechenden Schaltrampe betätigt und in den Bereich zwischen und außerhalb der Schaltrampen unbetätigt. Bei den Sensoren kann es sich um analog oder digital arbeitende Sensoren handeln.

Sofern in der Schaltstellung für die Neutralstellung der erste Sensor von der ersten Schaltrampe und der zweite Sensor von der zweiten Schaltrampe betätigt ist, kann auf einfache Weise erzielt werden, dass in der Neutralstellung beide Sensoren betätigt sind.

Besondere Vorteile ergeben sich, wenn gemäß einer Ausführungsform der Erfindung bei einer Betätigung des Schaltgetriebes ausgehend von der Schaltstellung für die Neutralstellung in die Schaltstellung für die erste Schaltstufe in einem ersten, an die Neutralstellung angrenzenden Hubbereich des Schaltgetriebes lediglich der erste Sensor den Schaltzustand ändert und von der ersten Schaltrampe nicht mehr betätigt ist, in einem zweiten Hubbereich des Schaltgetriebes, der sich an den ersten Hubbereich anschließt, lediglich der zweite Sensor den Schaltzustand ändert und von der zweiten Schaltrampe nicht mehr betätigt ist, in einem dritten Hubbereich bei Erreichen der Schaltstellung für die erste Schaltstufe, der sich an den zweiten Hubbereich anschließt, lediglich der erste Sensor seinen Schaltzustand ändert und von der dritten Schaltrampe betätigt ist.

Entsprechende Vorteile ergeben sich, wenn bei einer Betätigung des Schaltgetriebes ausgehend von der Schaltstellung für die Neutralstellung in die Schaltstellung für die zweite Schaltstufe in einem ersten, an die Neutralstellung angrenzenden Hubbereich des Schaltgetriebes lediglich der zweite Sensor den Schaltzustand ändert und von der zweiten Schaltrampe nicht mehr betätigt ist, in einem zweiten Hubbereich des Schaltgetriebes, der sich an den ersten Hubbereich anschließt, lediglich der erste Sensor den Schaltzustand ändert und von der ersten Schaltrampe nicht mehr betätigt ist, in einem dritten Hubbereich bei Erreichen der Schaltstellung für die zweite Schaltstufe, der sich an den zweiten Hubbereich anschließt, lediglich der zweite Sensor seinen Schaltzustand ändert und von der dritten Schaltrampe betätigt ist.

Durch entsprechende axiale Beabstandung der drei Schaltrampen und axiale Beabstandung der beiden Sensoren wird somit erzielt, dass bei einer bestimmten Bewegung des Schaltelements des Schaltgetriebes jeweils immer nur ein Sensor seinen Schaltzustand verändert. Im Normalbetrieb können somit niemals die beiden Sensoren gleichzeitig ihren Schaltzustand ändern. Hierdurch wird eine eindeutige Zuordnung der Schaltstellung des Schaltgetriebes zu den Sensorsignalen der beiden Sensoren möglich.

Eine eindeutige Zuordnung der Schaltstellung des Schaltgetriebes durch die Sensorsignale der beiden Sensoren wird hierbei auf besonders einfache Weise möglich, wenn die Sensoren mit einer elektronischen Steuereinrichtung in Wirkverbindung stehen, die aus den Schaltzuständen der Sensoren die Funktion des Schaltgetriebes überwacht, wobei bei einem sich verändernden Schaltzustand eines Sensors die elektronische Steuereinrichtung den unmittelbar zeitlich vorausgegangenen Vorzustand der Sensoren bei der Ermittlung der Stellung des Schaltgetriebes berücksichtigt. Aus der Schaltfolge der beiden Sensoren und somit den sich ändernden Schaltzuständen der beiden Sensoren kann auf einfache Weise in eindeutiger Weise die Stellung des Schaltelements des Schaltgetriebes erfasst und bei einem Schaltvorgang des Schaltgetriebes die Schaltstellung überwacht werden.

Besondere Vorteile ergeben sich, wenn die elektronische Steuereinrichtung bei einem Schaltvorgang des Schaltgetriebes die Schaltfolge der Schaltzustände der Sensoren ermittelt und überwacht.

Gemäß einer vorteilhaften Weiterbildung der Erfindung ermittelt die elektronische Steuereinrichtung eine unrichtige Schaltfolge der Schaltzustände der Sensoren und erkennt eine unrichtige Schaltfolge als Fehler, insbesondere eine Schaltfolge, bei der sich die Schaltzustände der beiden Sensoren gleichzeitig ändern. Mit der elektronischen Steuereinrichtung können unzulässige Schaltfolgen der beiden Sensoren sicher ermittelt und beispielsweise für Diagnosezwecke genutzt werden.

Die Sensoren können als einfach ausgebaute und mit hoher Betriebssicherheit arbeitende Näherungssensoren oder Stößelschalter ausgebildet sein.

Die Schaltrampen können gemäß einer vorteilhaften Ausführungsform der Erfindung von nockenförmigen Erhebungen oder gemäß einer alternativen Ausführungsform der Erfindung von nutförmigen Vertiefungen gebildet sein.

Gemäß einer vorteilhaften Ausführungsform der Erfindung weist das Schaltgetriebe zum Schalten der Schaltstellungen ein Schaltelement auf, das zur Betätigung mit einem Schaltaktuator in mechanischer Wirkverbindung steht. Die Schaltstellungserfassungsvorrichtung kann gemäß einer vorteilhaften Ausgestaltungsform der Erfindung an dem mit dem Schaltaktuator in mechanischer Wirkverbindung stehenden und von dem Schaltaktuator betätigten Schaltelement des Schaltgetriebes angeordnet sein oder alternativ an dem Schaltaktuator angeordnet werden.

Die Erfindung betrifft weiterhin ein hydromechanisches Getriebe mit einem durch eine Hydropumpe antreibbaren Hydromotor eines hydrostatischen Stufenlosgetriebes, wobei der Hydromotor ein mechanisches Zwei-Gang-Schaltgetriebe antreibt, insbesondere ein Stillstandsschaltgetriebe, das mit einem hydraulischen Schaltaktuator zwischen einer ersten Schaltstufe, einer zweiten Schaltstufe und einer eine Leerlaufstellung bildenden Neutralstellung schaltbar ist, wobei eine Schaltstellungserfassungsvorrichtung nach einem der vorangegangenen Ansprüche vorgesehen ist. Das erfindungsgemäße hydromechanische Getriebe ermöglicht es auf einfache und sichere Weise, ein als Stillstandschaltgetriebe ausgebildetes Zwei-Gang-Schaltgetriebe in die erste Schaltstufe für einen ersten Gang und die zweite Schaltstufe für den zweiten Gang sowie für die elektrohydraulische Synchronisation durch den Hydromotor bei einem Gangwechsel während der Fahrt aktiv in die Neutralstellung zu betätigen, um mit einem Stillstandschaltgetriebe einen Gangwechsel und einen Wechsel der Schaltstufen unter Fahrt zu ermöglichen, wobei mit der Schaltstellungserfassungsvorrichtung der während der Fahrt durchgeführte Schaltvorgang überwacht werden kann.

Weitere Vorteile und Einzelheiten der Erfindung werden anhand des in den schematischen Figuren dargestellten Ausführungsbeispiels näher erläutert. Hierbei zeigt
- Figur 1: einen Schaltaktuator mit einer erfindungsgemäßen Schalterfassungsvorrichtung,
- Figur 2: die Schaltstellungserfassungsvorrichtung der Figur 1 in einer vergrößerten Darstellung und
- Figur 3: eine Wertetabelle von Sensorsignalen der Schaltstellungserfassungsvorrichtung mit den zugeordneten Schaltzuständen des Schaltgetriebes.

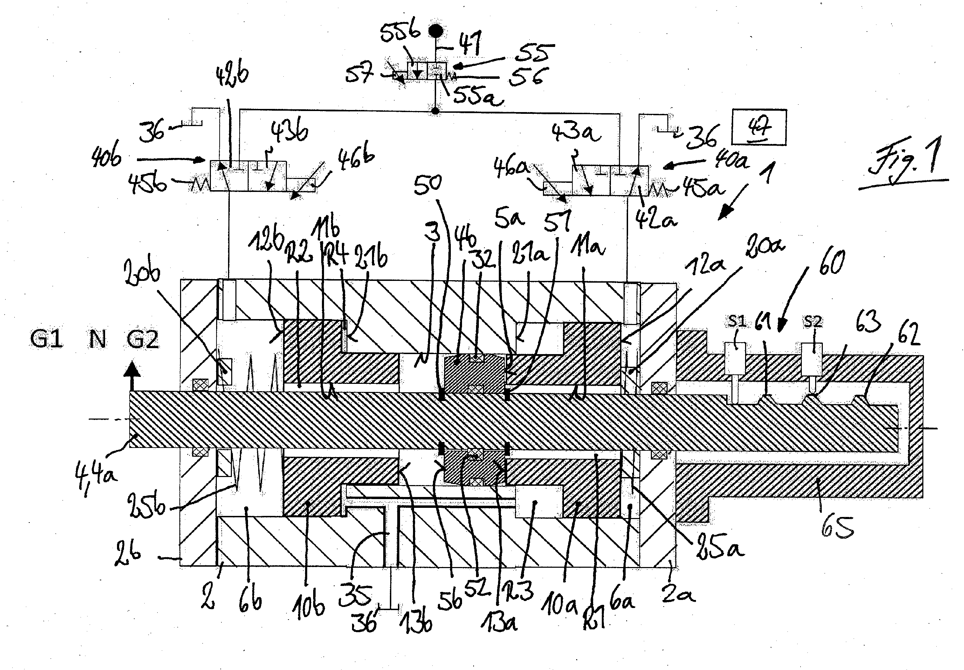

In der Figur 1 ist ein hydraulischer Schaltaktuator 1, mit dem ein nicht näher dargestelltes mechanischen Zwei-Gang-Schaltgetriebe, insbesondere ein Stillstandsschaltgetriebe, in Schaltstellungen für eine erste Schaltstufe G1, für eine zweite Schaltstufe G2 und für eine Leerlaufstellung bildende Neutralstellung N geschaltet werden kann, dargestellt.

Der Schaltaktuator 1 umfasst ein Gehäuse 2, das mit einer als Längsbohrung ausgebildeten Gehäusebohrung 3 versehen ist. In der Gehäusebohrung 3 ist ein Schaltkolben 4 des Schaltaktuators 1 längsverschiebbar angeordnet, dessen Axialpositionen und somit Schaltstellungen die Schaltstufen G1, G2 und die Neutralstellung N definieren. Die Neutralstellung N ist als Mittelstellung zwischen den beiden Schaltstufen G1, G2 ausgebildet. In der Figur 1 befindet sich der Schaltaktuator in der Schaltstellung für die zweite Schaltstufe G2. Der Schaltkolben 4 steht auf nicht mehr dargestellte Weise mit einem Schaltelement des Schaltgetriebes in Wirkverbindung, mit dem Schaltverzahnungen des Schaltgetriebes für die beiden Schaltstufen G1, G2 geöffnet und geschlossen werden können.

Der Schaltkolben 4 weist eine Kolbenstange 4a und einem an der Kolbenstange 4a angeordneten Kolbenabschnitt 4b auf. An einer ersten Stirnseite des Kolbenabschnitts 4b ist eine erste Steuerdruckfläche 5a ausgebildet ist, die mit einem ersten Steuerdruckraum 6a in Verbindung steht, der innerhalb des Gehäuses 2 ausgebildet ist. Bei einem im ersten Steuerdruckraum 6a anstehenden Steuerdruck wird der Schaltkolben 4 in die Schaltstellung für die erste Schaltstufe G1 betätigt.

An einer zweiten Stirnseite des Kolbenabschnitts 4b, die der ersten Stirnseite 5a gegenüberliegt, ist eine zweite Steuerdruckfläche 5b ausgebildet ist, die mit einem zweiten Steuerdruckraum 6b in Verbindung steht. Der zweite Steuerdruckraum 6b ist ebenfalls in dem Gehäuse 2 ausgebildet. Bei einem im zweiten Steuerdruckraum 6b anstehenden Steuerdruck ist der Schaltkolben 4 in die Schaltstellung für die zweite Schaltstufe G2 betätigbar.

Der Schaltaktuator 1 weist zwei Stufenkolben 10a, 10b auf, die jeweils koaxial zu der Kolbenstange 4a des Schaltkolbens 4 längsverschiebbar in der Gehäusebohrung 3 angeordnet sind. Die Stufenkolben 10a, 10b sind jeweils mit einer Längsbohrung 11a, 11b versehen, durch die die Kolbenstange 4a des Schaltkolbens 4 hindurchgeführt ist.

Der erste Stufenkolben 10a ist in dem ersten Steuerdruckraum 6a längsverschiebbar angeordnet und weist eine von dem im ersten Steuerdruckraum 6a anstehenden Steuerdruck beaufschlagte Steuerfläche 12a auf, die an einer äußeren Stirnseite des Stufenkolbens 10a ausgebildet ist. Der erste Stufenkolben 10a ist mit einer inneren Stirnseite 13a mit der ersten Stirnseite 5a des Kolbenabschnitts 4b des Schaltkolbens 4 in Wirkverbindung bringbar. Der zweite Stufenkolben 10b ist entsprechend in dem zweiten Steuerdruckraum 6b längsverschiebbar angeordnet und weist eine von dem im zweiten Steuerdruckraum 6b anstehenden Steuerdruck beaufschlagte Steuerfläche 12b auf, die an einer äußeren Stirnseite des Stufenkolbens 10b ausgebildet ist. Der zweite Stufenkolben 10b ist mit einer inneren Stirnseite 13b mit der zweiten Stirnseite 5b des Kolbenabschnitts 4b des Schaltkolbens 4 in Wirkverbindung bringbar.

Um die an der ersten Stirnseite des Kolbenabschnitts 4b ausgebildete Steuerdruckfläche 5a des Schaltkolbens 4 mit dem im ersten Steuerdruckraum 6a anstehenden Steuerdruck beaufschlagen zu können, ist zwischen dem Innendurchmesser des ersten Stufenkolbens 10a an der Längsbohrung 11a und dem Außendurchmesser der Kolbenstange ein Ringspalt R1 ausgebildet, über den die erste Stirnseite des Kolbenabschnitts 4b des Schaltkolbens 4 und somit die erste Steuerdruckfläche 5a mit dem ersten Steuerdruckraum 6a in Verbindung steht. Um die an der zweiten Stirnseite des Kolbenabschnitts 4b ausgebildete Steuerdruckfläche 5b des Schaltkolbens 4 mit dem im zweiten Steuerdruckraum 6b anstehenden Steuerdruck beaufschlagen zu können, ist entsprechend zwischen einem Innendurchmesser des zweiten Stufenkolbens 10b an der Längsbohrung 11b und dem Außendurchmesser der Kolbenstange 5a ein Ringspalt R2 ausgebildet, über den die zweite Stirnseite des Kolbenabschnitts 4b des Schaltkolbens 4 und somit die zweite Steuerdruckfläche 5b mit dem zweiten Steuerdruckraum 6b in Verbindung steht.

Der Schaltaktuator 1 ist mit gehäuseseitigen Anschlägen versehen, die die Position des Schaltkolbens 4 und somit die Schaltstellungen für die erste Schaltstufe G1, die zweite Schaltstufe G2 und die Neutralstellung N festlegen.

An dem Gehäuse 1 ist hierzu ein erster Anschlag 20a ausgebildet, der mit dem ersten Stufenkolben 10a zusammenwirkt und den maximalen Hub des Schaltkolbens 4 in der Schaltstellung für die zweite Schaltstufe G2 begrenzt. An dem Gehäuse 1 ist entsprechend ein zweiter Anschlag 20b ausgebildet, der mit dem zweiten Stufenkolben 10b zusammenwirkt und den maximalen Hub des Schaltkolbens 4 in der Schaltstellung für die erste Schaltstufe G1 begrenzt. Die Anschläge 20a, 20b sind im dargestellten Ausführungsbeispiel an Gehäusedeckeln 2a, 2b des Gehäuses 2 angeordnet bzw. ausgebildet, die den entsprechenden Steuerdruckraum 6a, 6b begrenzen. Die Kolbenstange 4a des Schaltkolbens 4 erstreckt sich durch die beiden Gehäusedeckel 2a, 2b und ist mittels Dichtungseinrichtungen gegenüber dem jeweiligen Gehäusedeckel 2a, 2b abgedichtet.

An dem Gehäuse 2 ist für jeden Stufenkolben 10a, 10b ein Anschlag 21a, 21b für die Neutralstellung N ausgebildet. Bei einer Druckbeaufschlagung des ersten Steuerdruckraums 6a mit einem Steuerdruck wird der erste Stufenkolben 10a an den dem ersten Stufenkolben 10a zugeordneten Anschlag 21a für die Neutralstellung N betätigt. Entsprechend wird bei einer Druckbeaufschlagung des zweiten Steuerdruckraums 6b mit einem Steuerdruck der zweite Stufenkolben 10b an den dem zweiten Stufenkolben 10b zugeordneten Anschlag 21b für die Neutralstellung N betätigt.

Zur Aufnahme der Stufenkolben 10a, 10b ist die Gehäusebohrung 3 beiderseits des Kolbenabschnitts 4b als Stufenbohrung ausgebildet, in der jeweils ein Stufenkolben 10a bzw. 10b längsverschiebbar angeordnet ist. Der Kolbenabschnitt 4b des Schaltkolbens 4 ist in einem im Durchmesser verringerten mittleren Abschnitt der Stufenbohrung angeordnet. Die im Durchmesser vergrößerten Abschnitte der jeweiligen Stufenbohrung bilden die Steuerdruckräume 6a, 6b.

Jeder Stufenkolben 10a, 10b ist mit einem im Durchmesser verringerten inneren Abschnitt, an dem die innere Stirnseite 13a, 13b ausgebildet ist, in dem mittleren Abschnitt der Stufenbohrung angeordnet. Mit einem im Durchmesser vergrößerten äußeren Abschnitt ist der Stufenkolben 10a in dem im Durchmesser vergrößerten äußeren Abschnitt der Stufenbohrung angeordnet, der den ersten Steuerdruckraum 6a bildet. Der zweite Stufenkolben 10b ist mit einem im Durchmesser vergrößerten äußeren Abschnitt in dem im Durchmesser vergrößerten äußeren Abschnitt der Stufenbohrung angeordnet, der den zweiten Streuerdruckraum 6b bildet.

Der erste Anschlag 21a für die Neutralstellung N ist hierbei zwischen dem Durchmesserabsatz der den ersten Stufenkolben 10a aufnehmenden Stufenbohrung und dem Durchmesserabsatz des ersten Stufenkolbens 10a gebildet. Entsprechend ist der zweite Anschlag 21b für die Neutralstellung N zwischen dem Durchmesserabsatz der den zweiten Stufenkolben 10b aufnehmenden Stufenbohrung und dem Durchmesserabsatz des zweiten Stufenkolbens 10b gebildet.

Der Schaltaktuator 1 weist eine erste Federeinrichtung 25a auf, die den ersten Stufenkolben 10a in Richtung der ersten Stirnseite 5a des Kolbenabschnitts 4b des Schaltkolbens 4 beaufschlagt, und eine zweite Federeinrichtung 25b auf, die den zweiten Stufenkolben 10b in Richtung der zweiten Stirnseite 5b des Kolbenabschnitts 4b des Schaltkolbens 4 beaufschlagt. Die Vorspannungen der Federeinrichtungen 25a, 25b sind derart bemessen, dass die Stufenkolben 10a, 10b in Anlage an dem Kolbenabschnitt 4b des Schaltkolbens 4 bzw. dem zugeordneten Anschlag 21a, 21b für die Neutralstellung N gehalten werden, die Federeinrichtungen 25a, 25b den Schaltkolben 4 jedoch nicht zentrieren und nicht in die Schaltstellung für die Neutralstellung N betätigen können.

Jeder Stufenkolben 10a, 10b ist gegenüber dem mittleren Abschnitt der Stufenbohrung und gegenüber dem äußeren Abschnitt der Stufenbohrung abgedichtet. Hierzu können an dem inneren Abschnitt und dem äußeren Abschnitt des Stufenkolbens 10a und des Stufenkolbens 10b nicht näher dargestellte Dichtungseinrichtungen vorgesehen werden. Alternativ kann die Abdichtung der beiden Stufenkolben 10a, 10b in den Stufenbohrungen durch entsprechende Passungen zwischen dem Innendurchmesser der Stufenbohrung und dem Außendurchmesser des Stufenkolbens 10a, 10b. Die Durchmesser der inneren Abschnitte der Stufenkolben 10a, 10b sind hierbei derart an den Durchmesser des mittleren Abschnitts der Gehäusebohrung 3 und die äußeren Abschnitte der Stufenkolben 10a, 10b derart an den Durchmesser der äußeren Abschnitte der Gehäusebohrung 3 angepasst, dass eine Abdichtung der Steuerdruckräume 6a, 6b erzielbar ist.

Weiterhin ist der Kolbenabschnitt 4b des Schaltkolbens 4 gegenüber dem mittleren Abschnitt der Gehäusebohrung 3 abgedichtet. Hierzu ist an dem Kolbenabschnitt 4b eine Dichtungseinrichtung 32 angeordnet.

An dem Stufenkolben 10a ist zwischen dem Durchmesserabsatz der Stufenbohrung und dem Durchmesserabsatz des ersten Stufenkolbens 10a ein erster Ringraum R3 gebildet, der über einen im Gehäuse 2 ausgebildeten Entlastunganal 35 zu einem Behälter 36 entlastet ist. Ein zweiter Ringraum R4, der zwischen dem Durchmesserabsatz der Stufenbohrung und dem Durchmesserabsatz des zweiten Stufenkolbens 10b gebildet ist, ist über den Entlastungskanal 35 ebenfalls zu dem Behälter 36 entlastet.

Der erste Steuerdruckraum 6a ist mittels eines ersten Steuerventils 40a mit einem Steuerdruck beaufschlagbar oder von dem Steuerdruck entlastbar. Entsprechend ist der zweite Steuerdruckraum 6b mittels eines zweiten Steuerventils 40b mit einem Steuerdruck beaufschlagbar oder von dem Steuerdruck entlastbar ist. Die Steuerventile 40a, 40b sind bevorzugt jeweils als elektrisch betätigtes Schaltventil oder als elektrisch betätigtes Proportionalventil oder als elektrisch betätigtes Druckregelventil ausgebildet.

Das Steuerventil 40a ist an eine Steuerdruckversorgungsleitung 41 angeschlossen, die mit einer Steuerdruckquelle in Verbindung steht. In einer ersten Steuerstellung 42a verbindet des Steuerventil 40a den Steuerdruckraum 6a zu dem Behälter 36. In einer zweiten Steuerstellung 43a verbindet das Steuerventil 40a zur Erzeugung eines in dem Steuerdruckraum 6a anstehenden Steuerdrucks den Steuerdruckraum 6a mit der Steuerdruckversorgungsleitung 41. Das Steuerventil 40b verbindet in einer ersten Steuerstellung 42b den Steuerdruckraum 6b zu dem Behälter 36. In einer zweiten Steuerstellung 43b verbindet das Steuerventil 40b zur Erzeugung eines in dem Steuerdruckraum 6b anstehenden Steuerdrucks den Steuerdruckraum 6b mit der Steuerdruckversorgungsleitung 41.

Im dargestellten Ausführungsbeispiel sind die Steuerventile 40a, 40b derart ausgeführt, dass im nicht angesteuerten Zustand der von dem entsprechenden Steuerventil 40a, 40b angesteuerte Steuerdruckraum 6a, 6b zu dem Behälter 36 entlastet ist und bei einer elektrischen Ansteuerung des jeweiligen Steuerventils 40a, 40b ein in dem zugeordneten Steuerdruckraum 6a, 6b anstehender Steuerdruck erzeugbar ist.

Die Steuerventile 40a, 40b sind hierzu mittels einer Federeinrichtung 45a, 45b in die erste Steuerstellung 42a, 42b betätigt und mittels einer elektrischen Betätigungseinrichtung 46a, 46b, beispielsweise eines Schaltmagneten oder Proportionalmagneten, in Richtung der zweiten Steuerstellung 42a, 42b betätigbar. Die elektrischen Betätigungseinrichtung 46a, 46b stehen zur Ansteuerung mit einer elektronischen Steuereinrichtung 47 in Wirkverbindung.

Sofern von der Steuereinrichtung 47 beide Steuerventile 40a, 40b in die Steuerstellungen 43a, 43b angesteuert sind und in beiden Steuerdruckräumen 6a, 6b ein Steuerdruck ansteht, befindet sich der Schaltaktuator 1 in der Schaltstellung für die Neutralstellung N. Der erste Stufenkolben 10a ist von dem im Steuerdruckraum 6a anstehenden Steuerdruck an der Steuerfläche 12a beaufschlagt und verfährt an den Anschlag 21a für die Neutralstellung N. Entsprechend ist der zweite Stufenkolben 10b von dem im Steuerdruckraum 6b anstehenden Steuerdruck an der Steuerfläche 12b beaufschlagt und verfährt an den Anschlag 21b für die Neutralstellung N. Über die inneren Stirnseite 13a, 13b der Stufenkolben 10a, 10b, die mit den gegenüberliegenden Stirnseite 5a, 5b des Kolbenabschnitts 4b des Schaltkolbens 4 in Kontakt stehen, wird der Schaltkolben 4 in die Schaltstellung für die Neutralstellung N betätigt. Sofern lediglich das Steuerventil 40a in die Steuerstellung 43a angesteuert wird und das Steuerventil 40b von der Steuereinrichtung 47 nicht angesteuert ist, steht lediglich im Steuerdruckraum 6a ein Steuerdruck an. Der Steuerdruckraum 6b ist über das in der Steuerstellung 42b befindliche Steuerventil 40b zum Behälter 36 entlastet. Über den Ringspalt R1 steht der im Steuerdruckraum 6a anstehende Steuerdruck an der Steuerfläche 5a des Kolbenabschnitts 4b an, so dass der Schaltkolben 4 nach in der Figur 1 links betätigt wird. Hierbei gelangt der von dem Kolbenabschnitt 4b mitgenommene zweite Stufenkolben 10b in Anlage an den Anschlag 20b und begrenzt den Kolbenhub des Schaltkolbens 4 und somit die Schaltstellung für die erste Schaltstufe G1. Sofern lediglich das Steuerventil 40b in die Steuerstellung 43b angesteuert wird und das Steuerventil 40a von der Steuereinrichtung 47 nicht angesteuert ist, steht lediglich im Steuerdruckraum 6b ein Steuerdruck an. Der Steuerdruckraum 6a ist über das in der Steuerstellung 42a befindliche Steuerventil 40a zum Behälter 36 entlastet. Über den Ringspalt R2 steht der im Steuerdruckraum 6b anstehende Steuerdruck an der Steuerfläche 5b des Kolbenabschnitts 4b an, so dass der Schaltkolben 4 nach in der Figur 1 rechts in die dargestellte Stellung betätigt wird. Hierbei gelangt der von dem Kolbenabschnitt 4b mitgenommene erste Stufenkolben 10a in Anlage an den Anschlag 20a und begrenzt den Kolbenhub des Schaltkolbens 4 und somit die Schaltstellung für die zweite Schaltstufe G2. Sofern von der Steuereinrichtung 47 beide Steuerventile 40a, 40b nicht betätigt sind und somit beide Steuerdruckräume 6a, 6b zum Behälter 36 entlastet sind, bleibt an dem Schaltaktuator 1 der Vorzustand und somit die zuvor betätigte Steuerstellung N, G1 bzw. G2 erhalten.

In der Figur 1 ist der Schaltkolben 4 mehrteilig ausgeführt und hierzu der Kolbenabschnitt 4b von einem separaten Bauteil gebildet, das an der Kolbenstange 4a befestigt und gegenüber der Kolbenstange 4a abgedichtet ist. Zur Befestigung des Kolbenabschnitts 4b an der Kolbenstange 4a ist eine Befestigungseinrichtung vorgesehen, die im dargestellten Ausführungsbeispiel von zwei Sicherungsscheiben 50, 51 gebildet ist. Die Abdichtung des Kolbenabschnitts 4b gegenüber der Kolbenstange 4a erfolgt in dem dargestellten Ausführungsbeispiel mittels einer Dichtungseinrichtung 52.

In der Steuerdruckversorgungsleitung 41 der beiden Steuerventile 40a, 40b ein elektrisch ansteuerbares Freigabeventil 55 angeordnet, das von der elektronischen Steuereinrichtung 47 ansteuerbar ist. Das Freigabeventil 55 weist eine Sperrstellung 55a und eine Durchflussstellung 55b auf. Im dargestellten Ausführungsbeispiel ist das Freigabeventil 55 von einer Federeinrichtung 56 in die Sperrstellung 55a betätigt und mittels einer elektrischen Betätigungseinrichtung 57, beispielsweise einem Schaltmagnet, in die Durchflussstellung 55b betätigbar. Die Betätigungseinrichtung 57 steht zur Ansteuerung mit der elektronischen Steuereinrichtung 47 in Verbindung.

Der Schaltaktuator 1 ist erfindungsgemäß mit einer Schaltstellungserfassungsvorrichtung 60 versehen, mit der die Schaltstellungen N, G1, G2 des Schaltaktuators 1 und somit die Schaltstellungen N, G1, G2 des Schaltgetriebes erfasst und überwacht werden können.

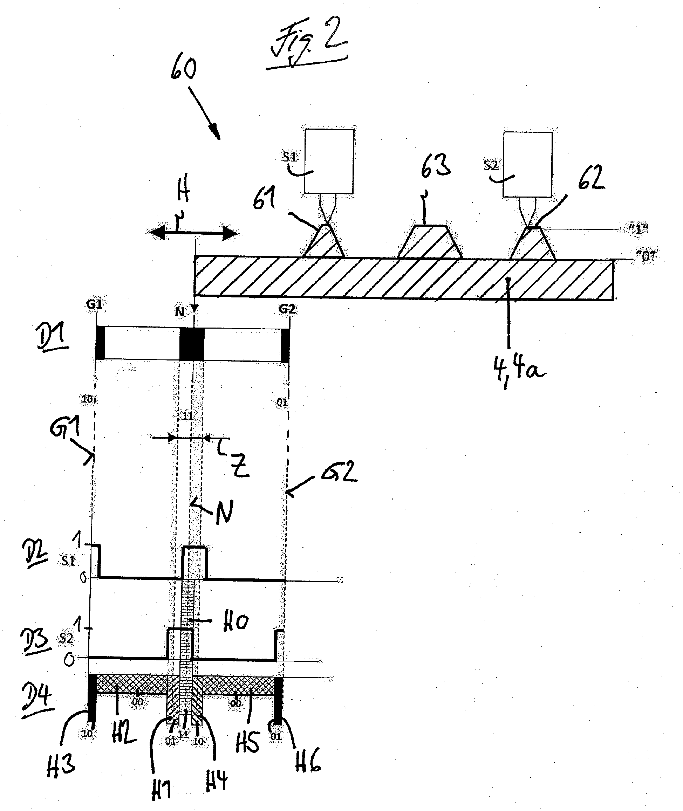

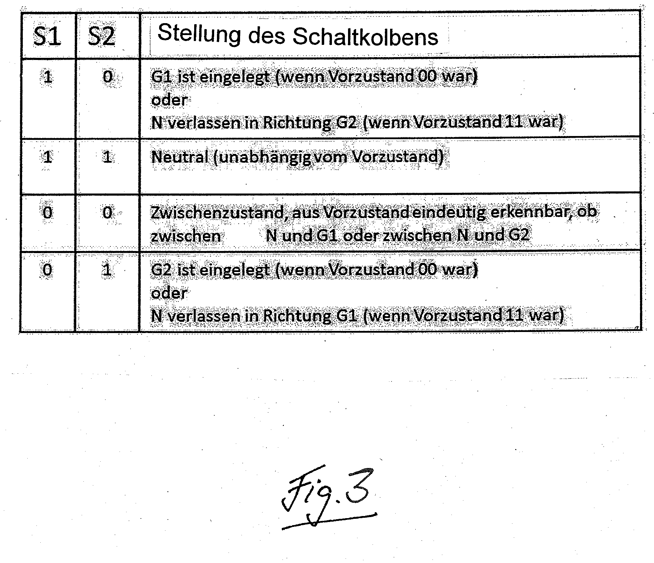

Der Aufbau der Schaltstellungserfassungsvorrichtung 60 und deren Funktion wird anhand der Figuren 2 und 3 näher beschrieben.

In der Figur 2 ist die Schaltstellungserfassungsvorrichtung 60 der Figur 1 in einer vergrößerten Darstellung dargestellt. Die Figur 2 zeigt die Schaltstellungserfassungsvorrichtung 60 in der Schaltstellung für die Neutralstellung N. In der Figur 1 ist die Schaltstellungserfassungsvorrichtung 60 in der Schaltstellung für die zweite Schaltstufe G2 dargestellt.

Die Schaltstellungserfassungsvorrichtung 60 weist zwei Sensoren S1, S2 auf, die mit mehreren Schaltrampen 61, 62, 63 zusammenwirken. Die Sensoren S1, S2 sind an dem Gehäuse 2 bzw. einem separaten Gehäuse 65 der Schalterfassungsvorrichtung 60, das an das Gehäuse 2 angebaut ist, angeordnet und die Schaltrampen 61, 62, 63 an dem längsverschiebbaren Schaltkolben 4. Die Sensoren S1, S2 sind mittels der Schaltrampen 61, 62, 63 in einen Zustand "1" betätigbar, der einem betätigten Zustand der Sensoren S1, S2 entspricht. Zwischen und außerhalb der Schaltrampen 61, 62, 63 befinden sich die Sensoren S1, S2 in einem Zustand "0", der einem unbetätigten Zustand der Sensoren S1, S2 entspricht. Die Sensoren S1, S2 stehen mit der elektronischen Steuereinrichtung 47 in Verbindung.

Die Schaltstellungserfassungsvorrichtung 60 weist eine erste Schaltrampe 61 und eine zweite Schaltrampe 62 auf, die in axialer Richtung voneinander beabstandet sind. Zwischen diesen beiden Schaltrampen 61, 62 ist eine dritte Schaltrampe 63 angeordnet ist, die sowohl von der ersten Schaltrampe 61 als auch von der zweiten Schaltrampe 62 in axialer Richtung beabstandet ist. Die beiden Sensoren S1, S2 sind ebenfalls in axialer Richtung voneinander beabstandet angeordnet.

Der axiale Abstand der Schaltrampen, 61, 62, 63, die Form der Schaltrampen 61, 62, 63 und der axiale Abstand der beiden Sensoren S1, S2 ist derart gewählt, dass in der Neutralstellung N des Schaltgetriebes beide Sensoren S1, S2 betätigt sind (Zustand "1" an beiden Sensoren S1, S2) und bei einer Hubbewegung H des Schaltkolbens 4 jeweils nur einer der beiden Sensoren S1, S2 seinen Schaltzustand ändert.

Der erste Sensor S1 wirkt über den Hubbereich H des Schaltkolbens 4 mit der ersten Schaltrampe 61 und der dritten Schaltrampe 63 zusammen. Der zweite Sensor S2 wirkt über den Hubbereich H des Schaltkolbens 4 mit der zweiten Schaltrampe 62 und der dritten Schaltrampe 63 zusammen.

In der Figur 2 ist die Neutralstellung N dargestellt. Bei einer Hubbewegung H des Schaltkolbens 4 nach in der Figur 2 links wird der Schaltkolben 4 in die Schaltstellung für die erste Schaltstufe G1 betätigt. Entsprechend wird bei einer Hubbewegung H des Schaltkolbens 4 nach in der Figur 2 rechts der Schaltkolben 4 in die Schaltstellung für die zweite Schaltstufe G2 betätigt.

In der Figur 2 sind hierbei in dem Diagramm D1 über den Hubbereich H die Schaltstellungen G1, N und G2 des Schaltgetriebes dargestellt. Das Diagramm D2 zeigt die Schaltzustände "0" und "1" des ersten Sensors S1 über den Hubbereich H. Das Diagramm D3 zeigt die Schaltzustände "0" und "1" des zweiten Sensors S2 über den Hubbereich H. In dem Diagramm D4 sind die sich ergebenden Sensorzustände der beiden Sensoren S1 und S2 über den Hubbereich H dargestellt. Die Sensorzustände in dem Diagramm D4 sind als Zahlenfolge mit zwei Ziffern dargestellt, wobei die erste Ziffer den Zustand "0" bzw. "1" des ersten Sensors S1 und die zweite Ziffer den Zustand "0" bzw. "1" des zweiten Sensors S2 bildet.

In der Figur 3 ist eine Wertetabelle der Sensorzustände der beiden Sensoren S1, S2 dargestellt und sind die von der elektronischen Steuereinrichtung 47 aus den Sensorzuständen der beiden Sensoren S1, S2 ermittelten Zustände und Stellungen des Schaltkolbens 4 dargestellt.

Wie in der Figur 2 verdeutlicht ist, ist in der Neutralstellung N des Schaltkolbens 4 der erste Sensor S1 von der ersten Schaltrampe 61 und der der zweite Sensor S2 von der zweiten Schaltrampe 63 betätigt ist. Als Sensorzustand der beiden Sensoren S1, S2 ergibt sich somit in der Neutralstellung N über einen mittigen Hubbereich H0 des Schaltkolbens 4 der Zustand "11".

Bei einer Betätigung des Schaltaktuators 1 ausgehend von der Schaltstellung für die Neutralstellung N in die Schaltstellung für die erste Schaltstufe G1 ändert sich in einem ersten Hubbereich H1 des Schaltkolbens 4, der an die Neutralstellung N angrenzt, lediglich der Zustand des ersten Sensor S1. Im ersten Hubbereichs H1 ist der erste Sensor S1 von der ersten Schaltrampe S1 nicht mehr betätigt und ändert seinen Schaltzustand von dem Zustand "1" in den Zustand "0". Der zweite Sensor S2 ist in dem Hubbereich H1 noch von der zweiten Schaltrampe 62 betätigt und weist unverändert den Schaltzustand "1" auf. Im ersten Hubbereichs H1 ändert sich somit der Schaltzustand der beiden Sensoren von "11" für die Neutralstellung N in "01". Bei einer weiteren Bewegung des Schaltkolbens 4 in Richtung der Schaltstellung G1 ändert in einem zweiten Hubbereich H2 des Schaltkolbens 4, der sich an den ersten Hubbereich H1 anschließt, lediglich der zweite Sensor S2 seinen Schaltzustand. Der zweite Sensor S2 ist in dem Hubbereich H2 nicht mehr von der zweiten Schaltrampe 62 betätigt und ändert seinen Schaltzustand von dem Zustand "1" in den Zustand "0". In dem Hubbereich H2 ist der erste Sensor S1 unverändert unbetätigt und weist den Schaltzustand "0" auf. In dem Hubbereich H2 ändert sich somit der Schaltzustand der beiden Sensoren S1, S2 von "01" für den ersten Hubbereich H1 in "00". Bei einer weiteren Bewegung des Schaltkolbens 4 in Richtung der Schaltstellung G1 ändert in einem dritten Hubbereich H3 bei Erreichen der Schaltstellung für die erste Schaltstufe G1, der sich an den zweiten Hubbereich H2 anschließt, lediglich der erste Sensor S1 seinen Schaltzustand. In dem Hubbereich H3 wird der erste Sensor S1 von der dritten Schaltrampe 63 betätigt, so dass der erste Sensor S1 seinen Schaltzustand von "0" in "1" ändert. Der zweite Sensor S2 ist im dritten Hubbereich H3 unverändert unbetätigt und weist den Schaltzustand "0" auf. In dem dritten Hubbereich H3 ändert sich somit der Schaltzustand der beiden Sensoren S1, S2 von dem Zustand "00" für den zweiten Hubbereich H2 in den Zustand "10".

Bei einer Betätigung des Schaltaktuators 1 ausgehend von der Schaltstellung für Neutralstellung N in die Schaltstellung für die erste Schaltstufe G1 ergibt sich somit eine Schaltfolge der Schaltzustände der beiden Sensoren S1, S2 von "11" - "01" - "00" -"10", die nacheinander durchlaufen wird. Die elektronische Steuereinrichtung 47 überwacht diese Schaltfolge auf Richtigkeit. Weichen bei einer Betätigung des Schaltaktuators 1 ausgehend von der Schaltstellung für Neutralstellung N in die Schaltstellung für die erste Schaltstufe G1 die von den Sensoren S1, S2 gelieferten Schaltzustände von dieser Schaltfolge ab, wird dies von der elektronischen Steuereinrichtung 47 als Fehler erkannt.

Bei einer Betätigung des Schaltaktuators 1 ausgehend von der Schaltstellung für die Neutralstellung N in die Schaltstellung für die zweite Schaltstufe G2 ändert sich in einem ersten Hubbereich H4 des Schaltkolbens 4, der an die Neutralstellung N angrenzt, lediglich der Zustand des zweiten Sensors S2. Im ersten Hubbereich H4 ist der zweite Sensor S2 von der zweiten Schaltrampe 62 nicht mehr betätigt und ändert seinen Schaltzustand von dem Zustand "1" in den Zustand "0". Der erste Sensor S1 ist in dem ersten Hubbereich H4 noch weiterhin von der ersten Schaltrampe 61 betätigt und weist unverändert den Schaltzustand "1" auf. Im ersten Hubbereich H4 ändert sich somit der Schaltzustand der beiden Sensoren von "11" für die Neutralstellung N in "10". Bei einer weiteren Bewegung des Schaltkolbens 4 in Richtung der Schaltstellung G2 ändert in einem zweiten Hubbereich H5 des Schaltkolbens 4, der sich an den ersten Hubbereich H4 anschließt, lediglich der erste Sensor S1 den Schaltzustand. Der erste Sensor S1 ist in dem Hubbereich H5 nicht mehr von der ersten Schaltrampe 61 betätigt, so dass sich Zustand des ersten Sensors S1 von "1" in "0" ändert. In dem Hubbereich H5 ist der zweite Sensor S2 unverändert unbetätigt mit dem Zustand "0". In dem Hubbereich H5 ändert sich somit der Schaltzustand der beiden Sensoren von dem Zustand "10" für den Hubbereich H4 in den Zustand "00". Bei einer weiteren Betätigung des Schaltkolbens 4 in Richtung der Schaltstellung G2 ändert in einem dritten Hubbereich H6 bei Erreichen der Schaltstellung für die zweite Schaltstufe G2, der sich an den zweiten Hubbereich H5 anschließt, lediglich der zweite Sensor S2 seinen Schaltzustand. In dem dritten Hubbereich H6 wird der zweite Sensor S2 von der dritten Schaltrampe 63 betätigt, so dass der zweite Sensor S2 seinen Zustand von "0" in "1" ändert. Der erste Sensor S1 ist in dem Hubbereich H6 weiterhin unbetätigt mit dem Zustand "0". In dem dritten Hubbereich H6 ändert sich somit der Schaltzustand der beiden Sensoren von "00" für den zweiten Hubbereich H5 in den Zustand "01". In der Figur 1 ist der Schaltkolben 4 in dem dritten Hubbereich H6 und der Schaltstellung für die zweite Schaltstufe G2 dargestellt.

Bei einer Betätigung des Schaltaktuators 1 ausgehend von der Schaltstellung für Neutralstellung N in die Schaltstellung für die zweite Schaltstufe G2 ergibt sich somit eine Schaltfolge der Schaltzustände der beiden Sensoren S1, S2 von "11" - "10" - "00" - "01", die nacheinander durchlaufen wird. Die elektronische Steuereinrichtung 47 überwacht diese Schaltfolge auf Richtigkeit. Weichen bei einer Betätigung des Schaltaktuators 1 ausgehend von der Schaltstellung für die Neutralstellung N in die Schaltstellung für die zweite Schaltstufe G2 die von den Sensoren S1, S2 gelieferten Schaltzustände von dieser Schaltfolge ab, wird dies von der elektronischen Steuereinrichtung 47 als Fehler erkannt.

Bei einer Betätigung des Schaltkolbens 4 ändert somit jeweils immer nur einer der beiden Sensoren S1 bzw. S2 seinen Schaltzustand. Nach einem Schaltzustand "11" kann nicht direkt ein Schaltzustand "00" folgen oder nach einem Schaltzustand "10" nicht direkt der Schaltzustand "01", wobei beide Sensoren S1, S2 gleichzeitig den Schaltzustand ändern.

Die elektronische Steuereinrichtung 47 ermittelt hierbei eine unrichtige Schaltfolge der Schaltzustände der Sensoren S1, S2 und erkennt als Fehler, wenn sich die Schaltzustände der beiden Sensoren S1, S2 gleichzeitig ändern.

Die elektronische Steuereinrichtung 47 überwacht hierbei aus den Schaltzuständen der Sensoren S1, S2 die Funktion des Schaltaktuators 1 und des Schaltgetriebes. Bei einem sich verändernden Schaltzustand eines Sensors S1 bzw. S2 berücksichtigt hierbei die elektronische Steuereinrichtung 47 den unmittelbar zeitlich vorausgegangenen Vorzustand der Sensoren S1, S2. Hierdurch ist mittels der elektronischen Steuereinrichtung 47 eine eindeutige Zuordnung der Stellung des Schaltkolbens 4 und somit der Schaltstellung des Schaltgetriebes zu den Zuständen der beiden Sensoren S1, S2 möglich, wie anhand der Tabelle der Figur 3 näher erläutert wird.

Wie aus der Figur 3 im Zusammenhang mit dem Diagramm D4 der Figur 2 ersichtlich ist, befindet sich der Schaltkolben 4 in der Steuerstellung für die erste Schaltstufe G1, falls die Sensoren S1, S2 den Schaltzustand "10" aufweisen und die Sensoren S1, S2 den unmittelbar vorausgehenden Vorzustand "00" hatten. Weisen die Sensoren S1, S2 den Schaltzustand "10" und war deren Vorzustand "11" hat der Schaltkolben 4 die Schaltstellung für die Neutralstellung N verlassen und bewegt sich in Richtung der Schaltstellung für die zweite Schaltstellung G2.

Sofern die beiden Sensoren S1, S2 den Zustand "11" aufweisen, befindet sich der Schaltaktuator 1 und der Schaltkolben 4 in der Neutralstellung N, unabhängig von dem Vorzustand der Sensoren S1, S2.

Weisen die beiden Sensoren S1, S2 den Zustand "00" auf, befindet sich der Schaltkolben 4 und somit das Schaltelement des Schaltgetriebes entweder in dem von dem Hubbereich H2 oder dem Hubbereich H5 gebildeten Zwischenzustand. Sofern der Vorzustand der Sensoren S1, S2 "01" war, befindet sich der Schaltkolben 4 in dem Hubbereich H2 zwischen der Neutralstellung N und der Schaltstellung für die erste Schaltstufe G1. War der Vorzustand der Sensoren S1, S2 "10", befindet sich der Schaltkolben 4 in dem Hubbereich H5 zwischen der Neutralstellung N und der Schaltstellung für die zweite Schaltstufe G2.

Liefern die Sensoren S1, S2 den Schaltzustand "01" befindet sich der Schaltkolben 4 in der Schaltstellung für die zweite Schaltstufe G2, sofern die Sensoren S1, S2 als Vorzustand "00" hatten. War jedoch der Vorzustand der Sensoren "11", hat der Schaltkolben 4 die Schaltstellung für die Neutralstellung N verlassen und bewegt sich in Richtung der Schaltstellung für die erste Schaltstellung G1.

In den Diagrammen D1 bis D4 der Figur 2 ist weiterhin eine eingriffsfreie Zone Z der Verzahnungen im Bereich um die Neutralstellung N dargestellt, in denen die Verzahnungen des Schaltelements des Schaltgetriebes, die in den Schaltstufen G1, G2 des Schaltgetriebes in Eingriff stehen, außer Eingriff sind und sich somit das Schaltgetriebe im Leerlauf befindet. Die Zustandsänderung der ersten Sensors S1 bei Verlassen der ersten Schaltrampe 61 bei einer Betätigung des Schaltaktuators 1 von der Neutralstellung N in Richtung der ersten Schaltstufe G1 ist innerhalb der eingriffsfreien Zone Z angeordnet. Die Zustandsänderung der beiden Sensoren S1, S2 von dem Zustand "11" in den Zustand "01" findet somit in der eingriffsfreien Zone Z statt. Die Zustandsänderung des zweiten Sensors S2 bei Verlassen der zweiten Schaltrampe 62 und somit die Zustandsänderung von dem Zustand "01" in den Zustand "00" der Sensoren S1, S2 findet statt, nachdem die Verzahnungen für die erste Schaltstufe G1 in Eingriff gelangt sind. Die Zustandsänderung der zweiten Sensors S2 bei Verlassen der zweiten Schaltrampe 62 bei einer Betätigung des Schaltaktuators 1 von der Neutralstellung N in Richtung der zweiten Schaltstufe G2 ist innerhalb der eingriffsfreien Zone Z angeordnet. Die Zustandsänderung der beiden Sensoren S1, S2 von dem Zustand "11" in den Zustand "10" findet somit in der eingriffsfreien Zone Z statt. Die Zustandsänderung des ersten Sensors S1 bei Verlassen der ersten Schaltrampe 61 und somit die Zustandsänderung von dem Zustand "10" in den Zustand "00" der Sensoren S1, S2 findet statt, nachdem die Verzahnungen für die zweite Schaltstufe G2 in Eingriff gelangt sind.

Die Sensoren S1, S2 können als Näherungssensoren oder als Stößelschalter ausgebildet sein.

Die erfindungsgemäße Schaltstellungserfassungsvorrichtung 60 weist einen einfachen und kostengünstigen Aufbau auf und ermöglicht ohne allzu hohe Anforderungen an die Fertigungsgenauigkeiten die Schaltstellungen des Schaltaktuators und des Schaltgetriebes eindeutig zu erkennen und zu ermitteln.

Die Erfindung ist nicht auf die dargestellten Ausführungsbeispiele beschränkt.

In dem dargestellten Ausführungsbeispiel sind die Schaltrampen 61, 62, 63 als nockenförmigen Erhebungen an dem Schaltkolben 4 ausgeführt, wobei die Sensoren S1, S2 den Zustand "1" aufweisen, wenn sie sich auf den Erhebungen befinden. Alternativ können die Schaltrampen 61, 62, 63 von nutförmigen Vertiefungen an dem Schaltkolben 4 ausgebildet werden, wobei die Sensoren S1, S2 den Zustand "1" aufweisen, wenn sie sich in den Vertiefungen befinden.

Die Schalterfassungsvorrichtung 60 kann - wie in der Figur 1 dargestellt ist - an dem Schaltkolben 4 des Schaltaktuators 1 angeordnet werden oder alternativ innerhalb des Schaltgetriebes an dem Schaltelement des Schaltgetriebe, beispielsweise einer mit einer Schaltklaue versehenen axial verschiebbaren Schaltstange des Schaltgetriebes, die mit dem Schaltkolben 4 in Wirkverbindung steht und von dem Schaltkolben 4 betätigt wird, angeordnet werden.

Der Schaltkolben 4 des Schaltaktuators 1 kann alternativ einteilig ausgeführt und hierzu der Kolbenabschnitt 4b einstückig an der Kolbenstange 4a ausgebildet werden.

Zudem kann das Freigabeventil 55 entfallen und zusätzlich eine mechanische Rasteinrichtung vorgesehen werden, die den Schaltkolben 4 in der Neutralstellung N sowie den Schaltstellungen der Schaltstufen G1, G2 arretiert.

## Patentansprüche

1. Schaltstellungserfassungsvorrichtung (60) zur Erfassung der Schaltstellungen eines mechanischen Zwei-Gang-Schaltgetriebes, insbesondere eines Stillstandsschaltgetriebes, wobei das Schaltgetriebe Schaltstellungen für eine erste Schaltstufe (G1) des Schaltgetriebes, für eine zweite Schaltstufe (G2) des Schaltgetriebes und für eine eine Leerlaufstellung bildende Neutralstellung (N) des Schaltgetriebes aufweist, wobei die Schaltstellungserfassungsvorrichtung (60) zwei Sensoren (S1, S2) aufweist, die mit mehreren relativ zu den Sensoren (S1, S2) längsbewegbaren Schaltrampen (61, 62, 63) zusammenwirken, wobei in der Neutralstellung (N) des Schaltgetriebes beide Sensoren (S1, S2) betätigt sind, **dadurch gekennzeichnet, dass** bei einer Hubbewegung eines zum Schalten der Schaltstellungen vorgesehenen Schaltelements des Schaltgetriebes im Normalbetrieb niemals die beiden Sensoren (S1, S2) gleichzeitig ihren Schaltzustand ändern, sondern jeweils nur einer der beiden Sensoren (S1, S2) seinen Schaltzustand ändert.

2. Schaltstellungserfassungsvorrichtung nach Anspruch 1, **dadurch gekennzeichnet, dass** die Schaltstellungserfassungsvorrichtung (60) eine erste Schaltrampe (61) und eine zweite Schaltrampe (62) aufweist, die in axialer Richtung voneinander beabstandet sind, wobei zwischen der ersten Schaltrampe (61) und der zweiten Schaltrampe (62) eine dritte Schaltrampe (63) angeordnet ist, die sowohl von der ersten Schaltrampe (61) als auch von der zweiten Schaltrampe (62) in axialer Richtung beabstandet ist, wobei die beiden Sensoren (S1, S2) in axialer Richtung voneinander beabstandet angeordnet sind.

3. Schaltstellungserfassungsvorrichtung nach Anspruch 2, **dadurch gekennzeichnet, dass** der erster Sensor (S1) über den Hubbereich (H) des Schaltelements des Schaltgetriebes mit der ersten Schaltrampe (61) und der dritten Schaltrampe (63) zusammenwirkt und der zweite Sensor (S2) über den Hubbereich (H) des Schaltelements des Schaltgetriebes mit der zweiten Schaltrampe (62) und der dritten Schaltrampe (63) zusammenwirkt.

4. Schaltstellungserfassungsvorrichtung nach einem der Ansprüche 1 bis 3, **dadurch gekennzeichnet, dass** die Sensoren (S1, S2) an der entsprechenden Schaltrampe (61, 62, 63) betätigt sind und in den Bereichen zwischen und außerhalb der Schaltrampen (61, 62, 63) unbetätigt sind.

5. Schaltstellungserfassungsvorrichtung nach einem der Ansprüche 2 bis 4, **dadurch gekennzeichnet, dass** in der Schaltstellung für die Neutralstellung (N) der erste Sensor (S1) von der ersten Schaltrampe (61) und der zweite Sensor (S2) von der zweiten Schaltrampe (62) betätigt ist.

6. Schaltstellungserfassungsvorrichtung nach einem der Ansprüche 2 bis 5, **dadurch gekennzeichnet, dass** bei einer Betätigung des Schaltgetriebes ausgehend von der Schaltstellung für die Neutralstellung (N) in die Schaltstellung für die erste Schaltstufe (G1) in einem ersten, an die Neutralstellung (N) angrenzenden Hubbereich (H1) des Schaltgetriebes lediglich der erste Sensor (S1) den Schaltzustand ändert und von der ersten Schaltrampe (61) nicht mehr betätigt ist, in einem zweiten Hubbereich (H2) des Schaltgetriebes, der sich an den ersten Hubbereich (H1) anschließt, lediglich der zweite Sensor (S2) den Schaltzustand ändert und von der zweiten Schaltrampe (62) nicht mehr betätigt ist, und in einem dritten Hubbereich (H3) bei Erreichen der Schaltstellung für die erste Schaltstufe (G1), der sich an den zweiten Hubbereich (H2) anschließt, lediglich der erste Sensor (S1) seinen Schaltzustand ändert und von der dritten Schaltrampe (63) betätigt ist.

7. Schaltstellungserfassungsvorrichtung nach einem der Ansprüche 2 bis 6, **dadurch gekennzeichnet, dass** bei einer Betätigung des Schaltgetriebes ausgehend von der Schaltstellung für die Neutralstellung (N) in die Schaltstellung für die zweite Schaltstufe (G2) in einem ersten, an die Neutralstellung (N) angrenzenden Hubbereich (H4) des Schaltgetriebes lediglich der zweite Sensor (S2) den Schaltzustand ändert und von der zweiten Schaltrampe (62) nicht mehr betätigt ist, in einem zweiten Hubbereich (H5) des Schaltgetriebes, der sich an den ersten Hubbereich (H4) anschließt, lediglich der erste Sensor (S1) den Schaltzustand ändert und von der ersten Schaltrampe (61) nicht mehr betätigt ist, und in einem dritten Hubbereich (H6) bei Erreichen der Schaltstellung für die zweite Schaltstufe (G2), der sich an den zweiten Hubbereich (H5) anschließt, lediglich der zweite Sensor (S2) seinen Schaltzustand ändert und von der dritten Schaltrampe (63) betätigt ist.

8. Schaltstellungserfassungsvorrichtung einem der Ansprüche 1 bis 7, **dadurch gekennzeichnet, dass** die Sensoren (S1, S2) mit einer elektronischen Steuereinrichtung (47) in Wirkverbindung stehen, die aus den Schaltzuständen der Sensoren (S1, S2) die Funktion des Schaltgetriebes überwacht, wobei bei einem sich verändernden Schaltzustand eines Sensors (S1; S2) die elektronische Steuereinrichtung (47) den unmittelbar zeitlich vorausgegangenen Vorzustand der Sensoren (S1, S2) berücksichtigt.

9. Schaltstellungserfassungsvorrichtung nach Anspruch 8, **dadurch gekennzeichnet, dass** die elektronische Steuereinrichtung (47) bei einem Schaltvorgang des Schaltgetriebes die Schaltfolge der Schaltzustände der Sensoren (S1, S2) ermittelt und überwacht.

10. Schaltstellungserfassungsvorrichtung nach Anspruch 8 oder 9, **dadurch gekennzeichnet, dass** die elektronische Steuereinrichtung (47) eine unrichtige Schaltfolge der Schaltzustände der Sensoren (S1, S2) ermittelt und als Fehler erkennt, insbesondere eine Schaltfolge, bei der sich die Schaltzustände der beiden Sensoren (S1, S2) gleichzeitig ändern.

11. Schaltstellungserfassungsvorrichtung nach einem der Ansprüche 1 bis 10, **dadurch gekennzeichnet, dass** die Sensoren (S1, S2) als Näherungssensoren oder als Stößelschalter ausgebildet sind.

12. Schaltstellungserfassungsvorrichtung nach einem der Ansprüche 1 bis 11, **dadurch gekennzeichnet, dass** die Schaltrampen (61, 62, 63) von nockenförmigen Erhebungen oder nutförmigen Vertiefungen gebildet sind.

13. Schaltstellungserfassungsvorrichtung nach einem der Ansprüche 1 bis 12, **dadurch gekennzeichnet, dass** das Schaltelement des Schaltgetriebes zur Betätigung mit einem Schaltaktuator (1) in mechanischer Wirkverbindung steht, wobei die Schaltstellungserfassungsvorrichtung (60) an dem Schaltelement des Schaltgetriebes angeordnet ist oder an dem das Schaltelement des Schaltgetriebes betätigendem Schaltaktuator (1) angeordnet ist.

14. Hydromechanisches Getriebe mit einem durch eine Hydropumpe antreibbaren Hydromotor eines hydrostatischen Stufenlosgetriebes, wobei der Hydromotor ein mechanisches Zwei-Gang-Schaltgetriebe antreibt, insbesondere ein Stillstandsschaltgetriebe, das mit einem hydraulischen Schaltaktuator (1) zwischen einer ersten Schaltstufe (G1), einer zweiten Schaltstufe (G2) und einer eine Leerlaufstellung bildenden Neutralstellung (N) schaltbar ist, wobei eine Schaltstellungserfassungsvorrichtung (60) nach einem der vorangegangenen Ansprüche vorgesehen ist.

## Claims

1. Shift position detection device (60) for detecting the shift positions of a mechanical two-speed transmission, in particular a mechanically unsynchronized transmission, wherein the transmission has shift positions for a first shift stage (G1) of the transmission, for a second shift stage (G2) of the transmission and for a neutral position (N) of the transmission, which neutral position forms an idling position, wherein the shift position detection device (60) has two sensors (S1, S2) which interact with a plurality of switching ramps (61, 62, 63) which can move in a longitudinal manner relative to the sensors (S1, S2), wherein the two sensors (S1, S2) are operated in the neutral position (N) of the transmission, **characterized in that**, in the event of a stroke movement of a shift element of the transmission, which shift element is intended for shifting the shift positions, during normal operation, the two sensors (S1, S2) never change their switching state at the same time, but rather only one of the two sensors (S1, S2) changes its switching state in each case.

2. Shift position detection device according to Claim 1, **characterized in that** the shift position detection device (60) has a first switching ramp (61) and a second switching ramp (62), which switching ramps are arranged at a distance from one another in the axial direction, wherein a third switching ramp (63) is arranged between the first switching ramp (61) and the second switching ramp (62), which third switching ramp is at a distance both from the first switching ramp (61) and from the second switching ramp (62) in the axial direction, wherein the two sensors (S1, S2) are arranged at a distance from one another in the axial direction.

3. Shift position detection device according to Claim 2, **characterized in that** the first sensor (S1) interacts with the first switching ramp (61) and the third switching ramp (63) over the stroke region (H) of the shift element of the transmission, and the second sensor (S2) interacts with the second switching ramp (62) and the third switching ramp (63) over the stroke region (H) of the shift element of the transmission.

4. Shift position detection device according to one of Claims 1 to 3, **characterized in that** the sensors (S1, S2) are operated on the corresponding switching ramp (61, 62, 63) and are not operated in the regions between and outside the switching ramps (61, 62, 63).

5. Shift position detection device according to one of Claims 2 to 4, **characterized in that**, in the shift position for the neutral position (N), the first sensor (S1) is operated by the first switching ramp (61) and the second sensor (S2) is operated by the second switching ramp (62).

6. Shift position detection device according to one of Claims 2 to 5, **characterized in that**, in the event of operation of the transmission starting from the shift position for the neutral position (N) to the shift position for the first shift stage (G1), in a first stroke region (H1) of the transmission, which first stroke region adjoins the neutral position (N), only the first sensor (S1) changes switching state and is no longer operated by the first switching ramp (61), in a second stroke region (H2) of the transmission, which second stroke region follows the first stroke region (H1), only the second sensor (S2) changes switching state and is no longer operated by the second switching ramp (62), and in a third stroke region (H3) when the shift position for the first shift stage (G1) is reached, which third stroke region follows the second stroke region (H2), only the first sensor (S1) changes its switching state and is operated by the third switching ramp (63).

7. Shift position detection device according to one of Claims 2 to 6, **characterized in that**, in the event of operation of the transmission starting from the shift position for the neutral position (N) to the shift position for the second shift stage (G2), in a first stroke region (H4) of the transmission, which first stroke region adjoins the neutral position (N), only the second sensor (S2) changes switching state and is no longer operated by the second switching ramp (62), in a second stroke region (H5) of the transmission, which second stroke region follows the first stroke region (H4), only the first sensor (S1) changes switching state and is no longer operated by the first switching ramp (61), and in a third stroke region (H6) when the shift position for the second shift stage (G2) is reached, which third stroke region follows the second stroke region (H5), only the second sensor (S2) changes its switching state and is operated by the third switching ramp (63).

8. Shift position detection device according to one of Claims 1 to 7, **characterized in that** the sensors (S1, S2) are operatively connected to an electronic control device (47) which monitors the function of the transmission from the switching states of the sensors (S1, S2), wherein, in the case of a changing switching state of a sensor (S1; S2), the electronic control device (47) takes into account the immediately preceding previous state of the sensors (S1, S2).

9. Shift position detection device according to Claim 8, **characterized in that** the electronic control device (47), in the event of a shift process of the transmission, determines and monitors the switching sequence of the switching states of the sensors (S1, S2).

10. Shift position detection device according to Claim 8 or 9, **characterized in that** the electronic control device (47) determines an incorrect switching sequence of the switching states of the sensors (S1, S2) and identifies it as a fault, in particular a switching sequence in which the switching states of the two sensors (S1, S2) change at the same time.

11. Shift position detection device according to one of Claims 1 to 10, **characterized in that** the sensors (S1, S2) are configured as proximity sensors or as plunger-type switches.

12. Shift position detection device according to one of Claims 1 to 11, **characterized in that** the switching ramps (61, 62, 63) are formed by cam-like protrusions or slot-like recesses.

13. Shift position detection device according to one of Claims 1 to 12, **characterized in that** the shift element of the transmission is mechanically operatively connected to a shift actuator (1) for operation purposes, wherein the shift position detection device (60) is arranged on the shift element of the transmission or is arranged on that shift actuator (1) which operates the shift element of the transmission.

14. Hydromechanical transmission comprising a hydraulic motor, which can be driven by a hydraulic pump, of a continuously variable hydrostatic transmission, wherein the hydraulic motor drives a mechanical two-speed transmission, in particular a mechanically unsynchronized transmission, which can be shifted by a hydraulic shift actuator (1) between a first shift stage (G1), a second shift stage (G2) and a neutral position (N) which forms an idling position, wherein a shift position detection device (60) according to one of the preceding claims is provided.

## Revendications

1. Dispositif de détection de positions de commutation (60) destiné à détecter les positions de commutation d'une boîte de vitesses mécanique à deux vitesses, en particulier d'une boîte de vitesses stationnaire, la boîte de vitesses comportant des positions de commutation pour un premier étage de commutation (G1) de la boîte de vitesses, pour un deuxième étage de commutation (G2) de la boîte de vitesses et pour une position neutre (N) de la boîte de vitesses qui forme une position de débrayage, le dispositif de détection de positions de commutation (60) comprenant deux capteurs (S1, S2) qui coopèrent avec une pluralité de rampes de commutation (61, 62, 63) déplaçables longitudinalement par rapport aux capteurs (S1, S2), les deux capteurs (S1, S2) étant actionnés dans la position neutre (N) de la boîte de vitesses, **caractérisé en ce que**, lors d'une course d'un élément de commutation de la boîte de vitesses prévu pour commuter les positions de commutation, les deux capteurs (S1, S2) ne changent jamais simultanément en fonctionnement normal mais un seul des deux capteurs (S1, S2) change d'état de commutation.

2. Dispositif de détection de positions de commutation selon la revendication 1, **caractérisé en ce que** le dispositif de détection de positions de commutation (60) comporte une première rampe de commutation (61) et une deuxième rampe de commutation (62) qui sont espacées l'une de l'autre dans la direction axiale, une troisième rampe de commutation (63), espacée de la première rampe de commutation (61) et de la deuxième rampe de commutation (62) dans la direction axiale, étant disposée entre la première rampe de commutation (61) et la deuxième rampe de commutation (62), les deux capteurs (S1, S2) étant disposés à distance l'un de l'autre dans la direction axiale.

3. Dispositif de détection de positions de commutation selon la revendication 2, **caractérisé en ce que** le premier capteur (S1) coopère avec la première rampe de commutation (61) et la troisième rampe de commutation (63) sur la course (H) de l'élément de commutation de la boîte de vitesses et le deuxième capteur (S2) coopère avec la deuxième rampe de commutation (62) et la troisième rampe de commutation (63) sur la course (H) de l'élément de commutation de la boîte de vitesses.

4. Dispositif de détection de positions de commutation selon l'une des revendications 1 à 3, **caractérisé en ce que** les capteurs (S1, S2) sont actionnés au niveau de la rampe de commutation correspondante (61, 62, 63) et ne sont pas actionnés dans les zones situées entre les rampes de commutation (61, 62, 63) et à l'extérieur de celles-ci.

5. Dispositif de détection de positions de commutation selon l'une des revendications 2 à 4, **caractérisé en ce que**, dans la position de commutation correspondant à la position neutre (N), le premier capteur (S1) est actionné par la première rampe de commutation (61) et le deuxième capteur (S2) est actionné par la deuxième rampe de commutation (62).

6. Dispositif de détection de positions de commutation selon l'une des revendications 2 à 5, **caractérisé en ce que**, lors de l'actionnement de la boîte de vitesses de la position de commutation, correspondant à la position neutre (N), jusque dans la position de commutation correspondant au premier étage de commutation (G1), dans une première zone de course (H1) de la boîte de vitesses qui est adjacente à la position neutre (N), seul le premier capteur (S1) change d'état de commutation et n'est plus actionné par la première rampe de commutation (61), dans une deuxième zone de course (H2) de la boîte de vitesses qui est adjacente à la première zone de course (H1), seul le deuxième capteur (S2) change d'état de commutation et n'est plus actionné par la deuxième rampe de commutation (62) et, dans une troisième zone de course (H3) qui est adjacente à la deuxième zone de course (H2), lorsque la position de commutation correspondant au premier étage de commutation (G1) est atteinte, seul le premier capteur (S1) change d'état de commutation et est actionné par la troisième rampe de commutation (63).

7. Dispositif de détection de positions de commutation selon l'une des revendications 2 à 6, **caractérisé en ce que**, lors de l'actionnement de la boîte de vitesses de la position de commutation, correspondant à la position neutre (N), jusque dans la position de commutation correspondant au deuxième étage de commutation (G2), dans une première zone de course (H4) de la boîte de vitesses qui est adjacente à la position neutre (N), seul le deuxième capteur (S2) change d'état de commutation et n'est plus actionné par la deuxième rampe de commutation (62), dans une deuxième zone de course (H5) de la boîte de vitesses qui est adjacente à la première zone de course (H4), seul le premier capteur (S1) change d'état de commutation et n'est plus actionné par la première rampe de commutation (61) et, dans une troisième zone de course (H6) qui est adjacente à la deuxième zone de course (H5), lorsque la position de commutation correspondant au deuxième étage de commutation (G2) est atteinte, seul le deuxième capteur (S2) change d'état de commutation et est actionné par la troisième rampe de commutation (63).

8. Dispositif de détection de positions de commutation selon l'une des revendications 1 à 7, **caractérisé en ce que** les capteurs (S1, S2) sont reliés fonctionnellement à un dispositif de commande électronique (47) qui surveille le fonctionnement de la boîte de vitesses à partir des états de commutation des capteurs (S1, S2), dans le cas d'un changement d'état de commutation d'un capteur (S1 ; S2), le dispositif de commande électronique (47) prenant en compte l'état immédiatement précédent des capteurs (S1, S2).

9. Dispositif de détection de positions de commutation selon la revendication 8, **caractérisé en ce que** le dispositif de commande électronique (47) détermine et surveille la séquence de commutation des états de commutation des capteurs (S1, S2) lors d'une opération de commutation de la boîte de vitesses.

10. Dispositif de détection de positions de commutation selon la revendication 8 ou 9, **caractérisé en ce que** le dispositif de commande électronique (47) détermine une séquence de commutation incorrecte des états de commutation des capteurs (S1, S2) et la détecte comme une erreur, en particulier une séquence de commutation dans laquelle les états de commutation des deux capteurs (S1, S2) changent simultanément.

11. Dispositif de détection de positions de commutation selon l'une des revendications 1 à 10, **caractérisé en ce que** les capteurs (S1, S2) sont conçus comme des capteurs de proximité ou comme des commutateurs à poussoir.

12. Dispositif de détection de positions de commutation selon l'une des revendications 1 à 11, **caractérisé en ce que** les rampes de commutation (61, 62, 63) sont formées par des élévations en forme de came ou des dépressions en forme de gorge.

13. Dispositif de détection de positions de commutation selon l'une des revendications 1 à 12, **caractérisé en ce que** l'élément de commutation de la boîte de vitesses est en liaison fonctionnelle mécanique avec un actionneur de commutation (1) pour effectuer l'actionnement, le dispositif de détection de positions de commutations (60) étant disposé au niveau de l'élément de commutation de la boîte de vitesses ou au niveau de l'actionneur de commutation (1) actionnant l'élément de commutation de la boîte de vitesses.

14. Boîte de vitesses hydromécanique comprenant un hydromoteur, pouvant être entraîné par une pompe hydraulique, d'une boîte de vitesses hydrostatique à variation continue, l'hydromoteur entraînant une boîte de vitesses mécanique à deux vitesses, en particulier une boîte de vitesses stationnaire, qui peut être commutée au moyen d'un actionneur de commutation hydraulique (1) entre un premier étage de commutation (G1), un deuxième étage de commutation (G2) et une position neutre (N) formant une position de débrayage, un dispositif de détection de positions de commutation (60) selon l'une des revendications précédentes étant prévu.
